# FASCICULE DE BREVET EUROPEEN

(11) **EP 0 538 165 B1**
(45) Date de publication et mention de la délivrance du brevet: **10.04.1996**
(21) Numéro de dépôt: 92470025.5
(22) Date de dépôt: 08.10.1992
(51) Int. Cl.: F16L 23/032

(54) **Moyen de verrouillage sur une canalisation posée**
Mittel zum Verbinden einer verlegten Rohrleitung
Means of locking a laid pipeline

(30) Priorité: 14.10.1991 FR 9112787
(43) Date de publication de la demande: 21.04.1993
(73) Titulaire: PONT-A-MOUSSON S.A., F-54000 Nancy (FR)
(72) Inventeur: Hoffmann, Klaus, W-8457 Kümmerbruck (DE)
(74) Mandataire: Puit, Thierry

(56) Documents cités:
- EP-A- 0 312 317
- DE-A- 3 146 219
- DE-A- 3 436 579
- FR-A- 2 238 886
- FR-A- 2 349 783

## Description

L'invention concerne un moyen de verrouillage destiné à être utilisé sur une canalisation posée.

Le verrouillage, après la pose sur un site d'une canalisation, ne peut pas être effectué habilement. Il est connu, pour effectuer un verrouillage sur le site, d'effectuer un cordon de soudure. Le cordon de soudure doit être réalisé sur place. Pour cela, il est nécessaire d'apporter sur le site du matériel de soudage tel qu'un poste de soudure électrique.

Après le soudage, il est effectué une opération de reconstitution du revêtement de la canalisation à l'endroit de la soudure. De plus, dans certaines conditions le soudage est difficile dans une fosse.

L'invention a pour but de remédier à ces inconvénients. A cet effet, le moyen de verrouillage selon l'invention comporte les caractéristiques de la revendication 1.

Suivant d'autres caractéristiques, le moyen d'ancrage du cylindre creux est constitué par une gorge.

Suivant une première variante, le cylindre creux du moyen de verrouillage est formé d'une seule pièce et le moyen d'ancrage est sur le diamètre externe du cylindre creux.

Une bride de forme annulaire comprenant des moyens de jonction axiale parallèle à l'axe de l'anneau formé par la bride est fixée audit moyen d'ancrage du cylindre creux.

Dans une autre variante, le moyen de verrouillage sur une canalisation posée selon l'invention, le cylindre creux est formé de deux pièces. Le moyen d'ancrage est sur le diamètre interne du cylindre creux dans le prolongement de surface.

Le moyen de verrouillage sur une canalisation posée selon l'invention, peut s'appliquer aux canalisations constituées de tuyaux métalliques, notamment à la coupe sur chantier d'un tronçon de conduite verrouillé, de la canalisation posée ou au verrouillage sur chantier d'un tronçon de conduite non verrouillé, de la canalisation posée.

L'invention est exposée ci-après à l'aide de dessins représentant seulement des variantes de réalisation de l'invention.

La Fig. 1 représente, en demi-coupe longitudinale, un moyen de verrouillage, dont le moyen d'ancrage est sur le diamètre externe du cylindre creux, réalisé conformément à la présente invention.

La Fig. 2 est une vue prise en coupe radiale suivant la ligne A-A de la Fig. 1.

La Fig. 3 représente, en coupe longitudinale, un moyen de verrouillage, dont le moyen d'ancrage est sur le diamètre interne du cylindre creux, réalisé conformément à la présente invention.

La Fig. 4 est une vue radiale du moyen de verrouillage de la Fig. 3.

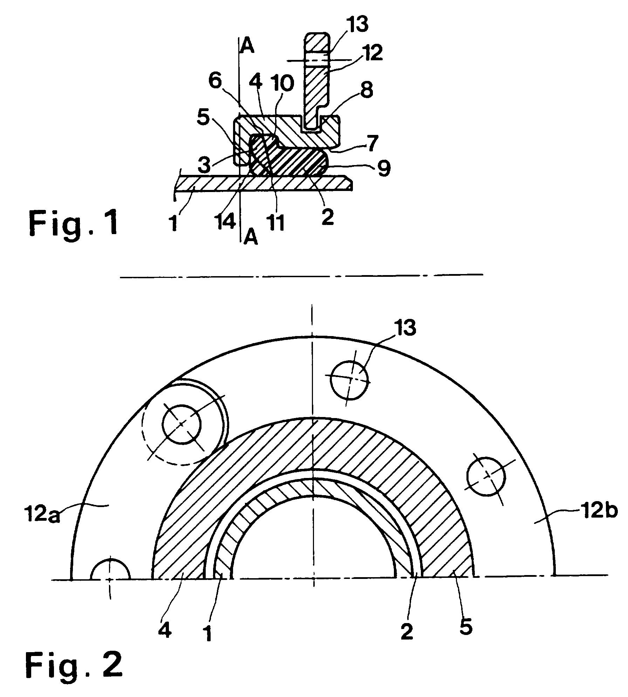

Le moyen de verrouillage d'une canalisation 1, présenté à la Fig. 1 comprend une garniture d'étanchéité 2 monobloc et une pièce formant sensiblement un cylindre creux 4, destinées à coopérer avec ladite garniture d'étanchéité 2. Le cylindre creux 4 présente sur son diamètre interne une partie annulaire 5, suivie d'une gorge 6, puis une surface 7 de diamètre constant et inférieur au diamètre de la gorge 6, le cylindre creux 4 présente sur son diamètre externe, une surface de diamètre constant, suivie d'une gorge formant un moyen d'ancrage 8.

Ladite garniture d'étanchéité 2 comporte un corps massif 9, un talon annulaire 10 et des inserts en matériau de grande dureté, par exemple en alliage métallique fritté ou en céramique. Les inserts sont noyés dans le talon annulaire 10 en matériau élastique et régulièrement répartis sur tout le pourtour de la garniture d'étanchéité 2.

Des inserts forment une structure de verrouillage 3.

Ils sont pourvus d'un bec d'accrochage 11 sur une canalisation posée 1 et ils sont susceptibles d'un débattement angulaire en s'appuyant sur le corps massif 9 en matériau élastique de ladite garniture d'étanchéité 2, lors du verrouillage.

Le bec d'accrochage 11 et une partie du corps 14 de chaque insert sont en saillie vers l'axe X-X du moyen de verrouillage.

Le talon annulaire 10 de ladite garniture d'étanchéité 2 est logé dans la gorge 6.

Les diamètres de la surface 7 et de la surface extérieure de la canalisation posée 1 sont à des cotes qui forment un entrefer qui obtient une compression minimum du corps massif 9 en matériau élastique de ladite garniture d'étanchéité 2 de façon à assurer l'étanchéité.

Une bride orientable 12 de forme annulaire est fixée au moyen d'ancrage 8 du cylindre creux 4.

La bride 12 comprend plusieurs moyens de jonction axiale 13 de fixation parallèle à l'axe de l'anneau formé par la bride 12, confondu avec l'axe X-X. Les axes des moyens de jonction axiale 13 sont situés chacun à une distance égale de l'axe X-X supérieur au rayon du cylindre creux 4.

La bride 12 verrouillée par la liaison que le cylindre creux 4 assure avec ladite garniture d'étanchéité 2 à inserts, permet la pose d'un élément muni d'une bride tel que par exemple un corps de robinet ou un dispositif de fixation d'une extrémité tubulaire lisse comportant un ensemble élastique d'étanchéité, une bague de maintien et une enveloppe munie d'une bride (voir le brevet français demandé par la Demanderesse sous le n° 7327653).

La Fig. 2 est une vue prise en demi-coupe radiale suivant la ligne A-A de la Fig. 1, les éléments du moyen de verrouillage étant repérés par les mêmes références numériques que celles désignant les éléments correspondants du moyen de verrouillage de la Fig. 1.

La canalisation posée 1 et la partie annulaire 5 du cylindre creux 4 sont représentées en demi-coupe radiale. La bride 12 et une partie de la garniture 2 sont représentées de face. La bride 12 est réalisée en deux pièces 12a et 12b assemblées entre-elles par le moyen de jonction axiale 13a, les deux pièces se superposant au niveau du moyen de jonction 13a.

Lors du changement d'un tronçon de conduite sur chantier, un tuyau de la canalisation posée 1 est découpé. Ensuite, le moyen de verrouillage est monté sur chaque extrémité de tuyau résultant de la coupe. Enfin le nouveau tronçon est rapporté et fixé par les moyens de jonction axiale 13 de la bride 12.

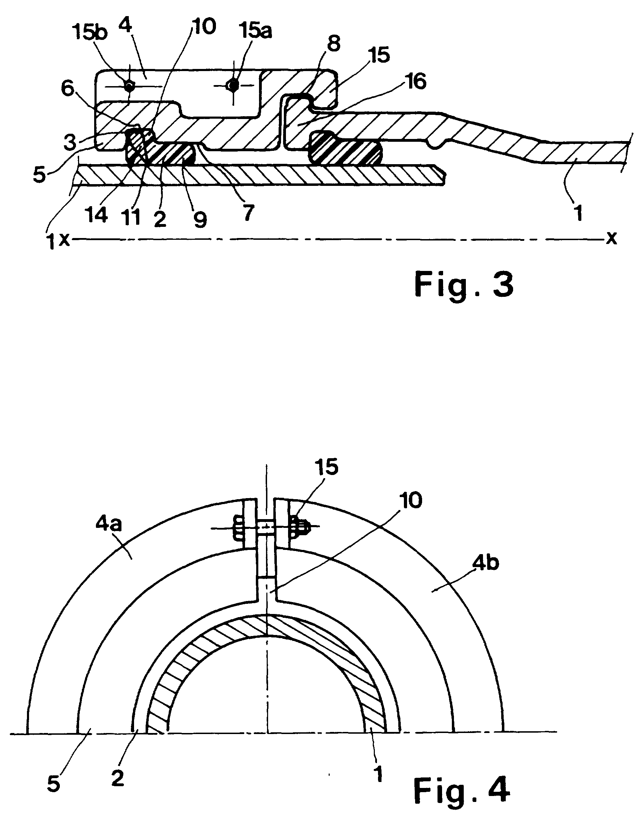

La Fig. 3 représente en demi-coupe une variante du moyen de verrouillage selon l'invention, les éléments du moyen de verrouillage étant repérés par les mêmes références numériques que celles désignant les éléments correspondants du moyen de verrouillage de la Fig. 1.

Ce moyen de verrouillage diffère de celui représenté à la Fig. 1, en ce que le moyen d'ancrage 8 est sur le diamètre interne du cylindre creux 4, à l'extrémité opposée de la partie annulaire 5. Le moyen d'ancrage 8 est constitué par une gorge, ledit cylindre creux 4 se terminant à son extrémité par la partie annulaire 15 dont le diamètre interne est supérieur à celui de la surface 7. La gorge 8 forme un logement pour un emboîtement 16 d'un tuyau de la canalisation posée 1.

Le moyen de verrouillage diffère encore de celui représenté à la Fig. 1, en ce que le cylindre creux 4 est réalisé en deux parties 4a et 4b, qui sont fixées l'une 4a à l'autre 4b par deux systèmes vis-écrous 15a et 15b.

La Fig. 4 est une demi-vue radiale du moyen de verrouillage suivant la Fig. 3, les éléments du moyen verrouillage étant repérés par les mêmes références numériques que celles désignant les éléments correspondants du moyen de verrouillage de la Fig. 3.

Pour verrouiller une canalisation déjà posée 1 mais non verrouillée, la garniture 2, ici composée d'au moins deux éléments assemblés, est rapportée sur le bout uni d'un tuyau de la canalisation 1, puis chacune des deux parties 4a et 4b du cylindre creux 4 est montée, en venant emprisonner respectivement la garniture 2 par le logement de son talon annulaire 10, dans la gorge 6 et, l'extrémité de l'emboîtement entourant ledit bout uni du tuyau de la canalisation 1, dans le moyen d'ancrage 8. Ainsi la canalisation 1 se retrouve verrouillée.

## Revendications

1. Moyen de verrouillage pour l'assemblage étanche et verrouillé entre deux éléments adjacents d'une canalisation (1) préalablement posée sur site, caractérisé en ce que ledit moyen de verrouillage comprend au moins une garniture d'étanchéité (2) logée dans un cylindre creux (4) avec lequel elle coopère et qui est formé d'une ou plusieurs pièces, ledit cylindre creux comprenant un moyen d'ancrage (8) pour fixer le moyen de verrouillage à un premier élément de canalisation et présentant sur son diamètre interne une partie annulaire (5), suivie d'une gorge (6) puis d'une surface (7) de diamètre sensiblement constant et inférieur au diamètre de la gorge (6), ladite garniture d'étanchéité (2) comportant un corps massif (9) et un talon annulaire (10) en matériau élastique, ainsi qu'une structure de verrouillage (3) destinée à verrouiller un second élément de canalisation audit moyen de verrouillage, ladite structure de verrouillage (3) étant formée par au moins un insert en matériau de grande dureté noyé dans le talon annulaire (10), chaque insert étant pourvu d'au moins un bec d'accrochage (11) sur le second élément de canalisation et étant susceptible d'un débattement angulaire en s'appuyant sur le corps massif (9) de la garniture d'étanchéité (2) lors du verrouillage.

2. Moyen de verrouillage selon la revendication 1, caractérisé en ce que le moyen d'ancrage (8) du cylindre creux (4) est constitué par une gorge.

3. Moyen de verrouillage selon la revendication 1 ou 2, caractérisé en ce que le cylindre creux (4) étant formé d'une seule pièce, le moyen d'ancrage (8) est sur le diamètre externe du cylindre creux (4).

4. Moyen de verrouillage selon la revendication 3, caractérisé en ce qu'une bride (12) de forme annulaire comprenant au moins un moyen de jonction axiale (13) de fixation parallèle à l'axe de l'anneau formé par la bride (12), est fixée au moyen d'ancrage (8) du cylindre creux (4).

5. Moyen de verrouillage selon la revendication 1 ou 2, caractérisé en ce que le cylindre creux (4) étant formé d'au moins deux pièces, le moyen d'ancrage (8) est sur le diamètre interne du cylindre creux (4) dans le prolongement de la surface (7).

6. Application du moyen de verrouillage selon l'une quelconque des revendications 1 à 4, à la coupe sur chantier d'un tronçon de conduite verrouillé d'une canalisation posée (1).

7. Application du moyen de verrouillage selon l'une quelconque des revendications 1,2 et 5, au verrouillage sur chantier d'un tronçon de conduite non verrouillé d'une canalisation posée (1).

8. Application du moyen de verrouillage selon l'une quelconque des revendications précédentes, aux canalisations constituées de tuyaux métalliques.

## Patentansprüche

1. Verriegelungsvorrichtung für die dichte und verriegelte Verbindung zweier angrenzender Elemente einer vorab verlegten Rohrleitung (1) an Ort und Stelle, dadurch gekennzeichnet, daß die Verriegelungsvorrichtung mindestens eine Dichtung (2) umfaßt, die sich in einem Hohlzylinder (4) befindet, mit dem sie zusammenwirkt, und die aus einem oder mehreren Teilen besteht, wobei der Hohlzylinder eine Verankerungsvorrichtung (8) zum Befestigen der Verriegelungsvorrichtung an einem ersten Rohrleitungselement und an seinem Innendurchmesser einen ringförmigen Bereich (5) aufweist, an den eine Auskehlung (6) und dann eine Fläche (7) mit im wesentlichen konstantem und kleinerem Durchmesser als der der Auskehlung (6) anschließt, wobei die Dichtung (2) einen massiven Körper (9) und eine ringförmige Nase (10) aus elastischem Material sowie einen Verriegelungsaufbau (3) aufweist, der vorgesehen ist, ein zweites Rohrleitungselement mit der Verriegelungsvorrichtung zu verriegeln, wobei der Verriegelungsaufbau (3) von mindestens einem Einsatz aus sehr hartem Material gebildet wird, der in der ringförmigen Nase (10) versenkt ist, wobei jeder Einsatz mindestens eine Nase (11) zur Befestigung an dem zweiten Rohrleitungselement aufweist und winklig ausfedern kann, indem er beim Verriegeln an den massiven Körper (9) aus elastischem Material der Dichtung (2) anliegt.

2. Verriegelungsvorrichtung nach Anspruch 1, dadurch gekennzeichnet, daß die Verankerungsvorrichtung (8) des Hohlzylinders (4) aus einer Auskehlung besteht.

3. Verriegelungsvorrichtung nach Anspruch 1 oder 2, dadurch gekennzeichnet, daß der Hohlzylinder (4) aus einem einzigen Stück besteht und sich die Verankerungsvorrichtung (8) am Außendurchmesser des Hohlzylinders (4) befindet.

4. Verriegelungsvorrichtung nach Anspruch 3, dadurch gekennzeichnet, daß ein ringförmiger Flansch (12), der mindestens eine Axialverbindungsvorrichtung (13) zur Befestigung parallel zur Achse des von dem Flansch (12) gebildeten Rings aufweist, an der Verankerungsvorrichtung (8) des Hohlzylinders (4) befestigt ist.

5. Verriegelungsvorrichtung nach Anspruch 1 oder 2, dadurch gekennzeichnet, daß sich die Verankerungsvorrichtung, nachdem der Hohlzylinder (4) aus mindestens zwei Teilen besteht, am Innendurchmesser des Hohlzylinders (4) in Verlängerung der Fläche (7) befindet.

6. Anwendung der Verriegelungsvorrichtung nach einem der Ansprüche 1 bis 4, auf das Schneiden eines verriegelten Leitungsstücks einer verlegten Rohrleitung (1) auf der Baustelle.

7. Anwendung der Verriegelungsvorrichtung nach einem der Ansprüche 1, 2 und 5, auf die Verriegelung eines nicht verriegelten Leitungsstücks einer verlegten Rohrleitung (1).

8. Anwendung der Verriegelungsvorrichtung nach einem der vorstehenden Ansprüche auf Rohrleitungen aus Metallrohren.

## Claims

1. Locking means for the sealed and locked assembly of two adjacent elements of a run of pipe (1) already laid on site, characterized in that the said locking means comprises at least one seal (2) housed in a hollow cylinder (4) with which it interacts and which is formed with one or more components, the said hollow cylinder comprising an anchoring means (8) for fixing the locking means to a first element of the run of pipe and exhibiting on its inside diameter an annular part (5) followed by a groove (6) and then by a surface (7) of substantially constant diameter less than the diameter of the groove (6), the said seal (2) including a solid body (9) and an annular heel (10) made of elastic material, as well as a locking structure (3) intended to lock a second element of the run of pipe to the said locking means, the said locking structure (3) being formed of at least one insert made of a very hard material embedded in the annular heel (10), each insert being provided with at least one spur (11) for catching on the second element of the run of pipe and being capable of an angular excursion while pressing on the solid body (9) of the seal (2) during locking.

2. Locking means according to Claim 1, characterized in that the anchoring means (8) of the hollow cylinder (4) consists of a groove.

3. Locking means according to Claim 1 or 2, characterized in that, the hollow cylinder (4) being formed of a single component, the anchoring means (8) is on the outside diameter of the hollow cylinder (4).

4. Locking means according to Claim 3, characterized in that a flange (12) of annular shape, comprising at least one means (13) for making an axial joint for fixing parallel to the axis of the ring formed by the flange (12), is fixed to the anchoring means (8) of the hollow cylinder (4).

5. Locking means according to Claim 1 or 2, characterized in that, the hollow cylinder (4) being formed of at least two components, the anchoring means (8) is on the inside diameter of the hollow cylinder (4) in the extension of the surface (7).

6. Application of the locking means according to any one of Claims 1 to 4, to the sectioning on site of a locked length of pipe from a laid run of pipe (1).

7. Application of the locking means according to any one of Claims 1, 2 and 5, to the locking on site of an unlocked length of pipe of a laid run of pipe (1).

8. Application of the locking means according to any one of the preceding claims to runs of pipe consisting of metal tubes.
